# EUROPEAN PATENT SPECIFICATION

(11) **EP 2 214 070 B1**
(45) Date of publication and mention of the grant of the patent: **05.06.2013**
(21) Application number: 10150654.1
(22) Date of filing: 13.01.2010
(51) Int. Cl.: G05B 19/401, G05B 19/404, B24B 49/02, B23Q 15/18, B23Q 17/20

(54) **Machine tool with workpiece size measurement**
Maschinenwerkzeug mit Messung der Werkstücksgrösse
Machine-outil avec mesure de la taille de la pièce

(30) Priority: 29.01.2009 JP 2009018103
(43) Date of publication of application: 04.08.2010
(73) Proprietor: JTEKT CORPORATION, Osaka-shi Osaka 542-8502 (JP)
(72) Inventor: Yonezu, Toshihiro, Osaka-shi, Osaka 542-8502 (JP); Yogo, Tatsuya, Osaka-shi, Osaka 542-8502 (JP); Abeta, Satoshi, Osaka-shi, Osaka 542-8502 (JP)
(74) Representative: TBK

(56) References cited:
- DE-A1- 19 616 855
- DE-A1- 19 857 364
- US-A- 5 562 526
- US-A- 5 773 731
- US-B1- 7 036 411

## Description

### BACKGROUND OF THE INVENTOIN

### 1. Field of the Invention

The present invention relates to a machine tool and a machining method thereof, especially the machine tool having a servo motor moving a tool supporting member, and a servo driver driving the servo motor.

### 2. Description of the Prior Art

It is well known that there are several machine tools controlling a servo motor to move a wheel slide (defined as a "tool supporting member" here) by the servo motor, for example disclosed in a laid-open patent publication of Tokkai 2005-327191. In this disclosed prior machine tool, it is disclosed that a feed back control is executed by detecting a position of the tool supporting member such as a rotational angle of the servo motor or a linear position of a linear scale. Namely, the feedback control is executed by the position of the tool supporting member so that tool supporting member is moved to a desired position by the feedback control of the position of the tool supporting member.

A tool or a workpiece machined by the tool is slightly deformed to be bent by machining stress because its flexibility. And also, there is some thermal distortion in the tool or the workpiece by machining. Any influence by the deformation or the thermal distortion of the tool or the workpiece can not removed by the feedback control in the prior art. Therefore, a higher accurate machining of the workpiece can be done by checking these influences.

It is also well known that there are several machine tools having a sizing device measuring a diameter of the workpiece, for example measuring an inner diameter disclosed in another laid-open patent publication of Tokkai 2005-279882. In this another prior art, it is disclosed that a process change is done by an inner diameter of the workpiece measured by the sizing device. The process is changed when a measured value by the sizing device reaches to a predetermined value. For example, it is changed from a rough grinding process to a precise grinding process or from a precise grinding process to a finish grinding process.

Inventors of the present invention conceived to be able to machine in considering these influences by the slight deformation or the thermal distortion of the tool or the workpiece by the way that the servo motor driving is executed on a basis of information measured by the sizing device in order to achieve the higher precise machining. Inventors of the present invention also conceived to be able to achieve a higher responsibility by driving the servo motor on the basis of the measured information by the sizing device than that by the prior art executing the feedback control by the detecting information of the position detector such as linear scale etc.

However, the sizing device in the prior art has a construction to output a signal only when the sizing value reaches to the predetermined value because of its purpose to change these processes.

Document US 5 773 731 discloses an apparatus for detecting a residual grinding amount which includes first and second feelers adapted to contact the peripheral surface of a workpiece such that they move, in accordance with a variation in the diameter of the workpiece, in opposite directions each perpendicular to the direction of deflection of the workpiece, and a first displacement detector for detecting relative displacement between the first and second feelers. The apparatus also includes a third feeler adapted to contact the peripheral surface of the workpiece such that it moves, in accordance with the variation in the diameter of the workpiece as well as a variation in the deflection of the workpiece, in the direction of deflection of the workpiece, and a second displacement detector for detecting displacement of the third feeler. The residual grinding amount is calculated based on the displacements detected by the first and second displacement detectors.

Document DE 198 57 364 discloses a method for controlling the process during rough grinding of a workpiece in which the workpiece is measured during grinding by a sensor to ascertain an actual size, and the measured actual size is corrected in a continuously automatic manner to attain a predetermined specified size according to grinding time. There is also disclosed a grinding machine which is provided for carrying out the method and which comprises a grinding wheel for rough grinding a workpiece on a grinding spindle head. The grinding machine also has a sensor for detecting a ground workpiece dimension, and comprises a machine control, whereby the workpiece is held between a workpiece spindle and a tail spindle. The sensor is arranged primarily in a plane formed by the contact area of the grinding wheel which turns on the workpiece, and during rough grinding, said sensor continuously transmits measurement signals to the machine control. Said machine control controls the grinding wheel based on these signals in such a way that the grinding process can be executed as an in-process control.

Document US 5 562 526 A discloses a method and apparatus for grinding a workpiece. A numerical controlled grinding machine for grinding a workpiece, in which a thermal displacement taking place between a wheel head and the workpiece, is detected with the workpiece not being subjected to the bending due to a grinding resistance. The thermal displacement is calculated from the difference between the present position of the wheel head detected by a position detector and the theoretical position thereof converted from the diameter of the workpiece measured by an in-process measuring device. The position data for the wheel head stored in a numerical controller is compensated for the calculated thermal displacement for use in the subsequent control of feed movement between the workpiece and the wheel head.

### SUMMARY OF THE INVENTION

In view of the previously mentioned circumstances, it is an object of the present invention to provide a machine tool which can execute to machine the workpiece more precisely.

This object is achieved by a machine tool according to claim 1. Advantageous further developments are as set forth in the dependent claims.

According to one aspect there is provided a machine tool mainly including a monitoring sensor monitoring a machining status of a workpiece by a tool, the monitoring sensor are connected to a simultaneous communication network to which a CNC and a servo driver are connected, the servo driver drives a servo motor by applying electric power to the servo motor moving the tool to the workpiece along a predetermined axis. Thereby, for the present aspect, it can machine the workpiece by the tool higher accurately by machining the workpiece by the tool in a way to checking any influence of deformation or thermal distortion of the tool or the workpiece. And also, since the feedback control is directly executed by the monitoring information from the monitoring sensor, the machine tool according to the present invention can have higher responsibility to that of the prior art.

In a second aspect, according to the first aspect, there is provided mainly the construction that the monitoring sensor functions as a slave to output monitored information of the machining status each time when a reference signal is input from the CNC functioning as a master, and the servo driver drives the servo motor on a basis of the monitored information being output from the monitoring sensor. Thereby, the servo motor can firmly drive the servo motor by using the monitoring information from the monitoring sensor.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
Fig. 1 is a over view of the grinding machine;
Fig. 2 is a connecting construction of the grinding machine;
Fig. 3 is a timing chart of a master and slaves constructed the grinding machine;
Fig. 4 is a block diagram of an X-axis servo driver 33 in first embodiment of the present invention;
Fig. 5a is a graph showing a changing status of the outer diameter of the workpiece according to a time passing in the second feedback control, and Fig. 5b is a graph showing a changing status of the outer diameter of the workpiece according to a time passing in the first feedback control;
Fig. 6 is a block diagram of an X-axis servo driver 33 in further other embodiment of the first embodiment of the present invention;
Fig. 7 is a block diagram of a X-axis servo driver 33 in second embodiment of the present invention;
Fig. 8a is a graph showing a changing status of the outer diameter of the workpiece according to a time passing at switching from the second feedback control to the first feedback control in the second embodiment, and Fig. 8b is a graph showing a first gain and a second gain;
Fig. 9a is a graph showing a changing status of the outer diameter of the workpiece according to a time passing at switching from the second feedback control to the first feedback control in another embodiment of the second embodiment, and Fig. 9b is a graph showing a first gain and a second gain;
Fig. 10a is a graph showing a changing status of the outer diameter of the workpiece according to a time passing at switching from the second feedback control to the first feedback control in other embodiment of the second embodiment, Fig. 10b is a graph showing a torque value, and Fig. 10c is a graph showing a first gain and a second gain.

### DETAILED DESCRIPTION OF THE PREFERRED EMBODIMENTS

Embodiments of the machine tool according to the present invention will be explained hereinafter referred to Figures. One example of the machine tool according to the present invention is explained about a grinding machine.

### [First embodiment of the present invention]

### [Mechanical construction of the grinding machine]

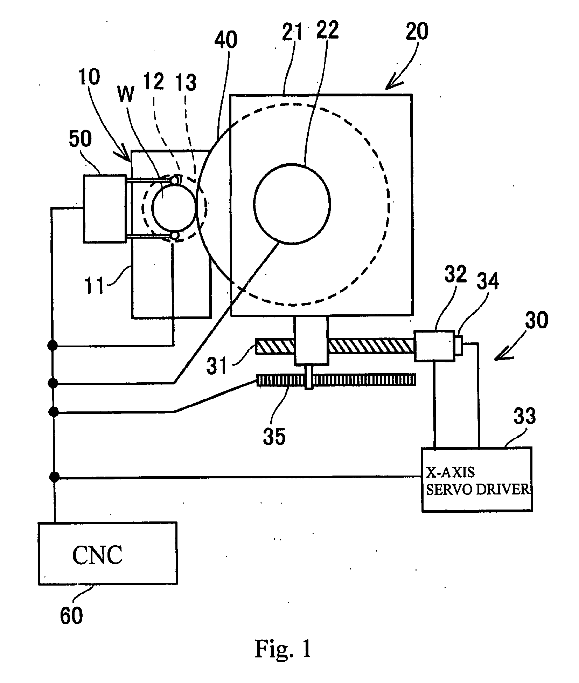

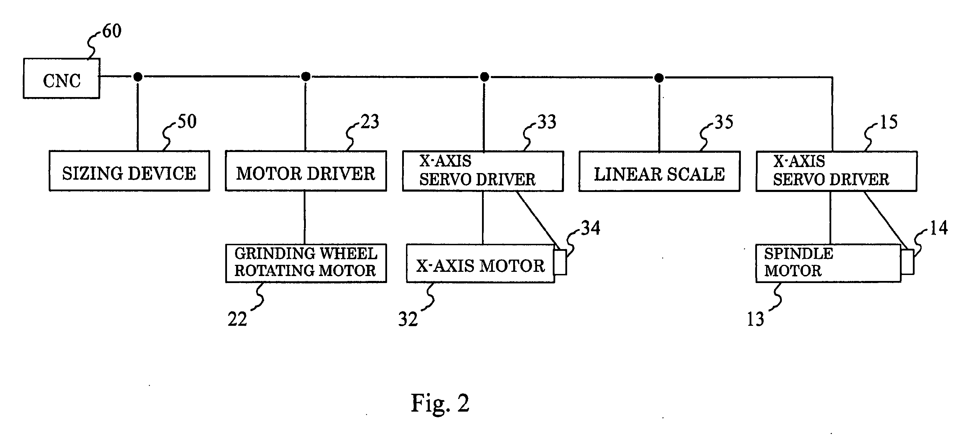

The machine construction of the grinding machine of the first embodiment according to the present invention is explained herein referred to Fig. 1 and Fig. 2.

As shown in Fig. 1, the grinding machine provides a spindle device 10, a grinding wheel supporting device 20, a wheel head driving device 30, a grinding wheel 40, a sizing device 50 and a CNC (Computer Numerical Controller) 60. A workpiece W ground by the grinding machine is a longitudinal cylindrical shaft and the grinding machine performs a grinding to machine a peripheral surface of the workpiece W.

The spindle device 10 includes a head stock 11, a spindle 12, a spindle motor 13, a spindle encoder 14 and a servo driver 15 for the spindle. The head stock 11 is mounted on an un-illustrated bed. The spindle 12 is supported rotatably around an axis parallel to a Z-axis by penetrating through the spindle head 11. On the spindle 12 is mounted a chuck holding one axial end of the workpiece W. The spindle encoder 14 detects a rotational angle of the spindle motor 13. The spindle servo driver 15 supplies electrical power to the spindle motor 13 on a basis of a commanded value output from the CNC 60 in order to drive the spindle motor 13 rotatably.

The grinding wheel supporting device 20 is corresponded to "a tool supporting member" of this invention and includes a wheel slide 21, a grinding wheel rotating motor 22 and a motor driver 23. The wheel slide 21 supports a disk-like grinding wheel 40 rotatably around an axis parallel to the Z-axis and is movable along an X-axis direction and the Z-axis direction to the workpiece W held by the spindle chuck. The wheel slide 21 is corresponded to "a tool" of this invention. The grinding wheel rotating motor 22 is mounted on the wheel slide 21 and rotates the grinding wheel 40. The motor driver 23 drives the grinding wheel rotating motor 22 in accordance with a commanded value of rotation being output from the CNC 60 in a way that a rotational number of the grinding wheel rotating motor 22 is coincided with the commanded value of the rotation. In general, the commanded value of the rotation is constant.

The wheel slide driving device 30 is a device to move the wheel slide 21 along the X-axis direction and the Z-axis direction relatively to the workpiece W. Fig. 1 shows only a moving construction of the wheel slide driving device 30 along the X-axis. The wheel slide driving device 30 includes an X-axis ball screw 31, an X-axis motor 32, an X-axis servo driver 33, an X-axis encoder 34 and a linear scale 35. The X-axis motor 32 is corresponded to "a servo motor" of the present invention. The X-axis encoder 34 is corresponded to "a position detector" of the present invention detecting a rotational position angle of the X-axis servo motor 32. The linear scale 35 is also corresponded to "the position detector" of the present invention detecting a relative position of the grinding wheel supporting device 20 to the workpiece W along the X-axis.

The X-axis ball screw 31 is supported on a bed rotatably around the X-axis. A nut member of the X-axis ball screw 31 is fixed to the wheel slide 21. The X-axis motor 32 drives the X-axis ball screw 31 rotatably. Therefore, the X-axis motor 32 moves the wheel slide 21 against the workpiece W along the X-axis direction through the X-axis ball screw 31. The X-axis servo driver 33 drives the X-axis motor 32 in accordance with a commanded value being output from the CNC 60 by supplying an electrical power to the X-axis motor 32. The X-axis encoder 34 detects a rotational angle of the X-axis motor 32. The linear scale 35 is mounted on the bed and detects a position of the wheel slide 21 along the X-axis against the bed.

Besides, in the wheel slide driving device 30 is not illustrated the moving construction of the wheel slide 20 against the workpiece W along the Z-axis direction but this moving construction is substantially same to the construction replaced from that in the X-axis direction to that in the Z-axis direction, therefore it is not illustrated.

The sizing device 50 measures a machined profile of the workpiece W, that is to say a diameter of the workpiece W, in detail the sizing device 50 measures a deviation of the value of the machined profile from a target value being set in the sizing device 50 previously. The sizing device 50 is corresponded to a monitoring sensor of the present invention. The deviation is defined as "a size deviation" hereinafter. The sizing device 50 is corresponded to "a profile measuring sensor" of the present invention. The target value or a target profile is a finished diameter of the workpiece by machining so that the size deviation corresponds to a remaining diameter to be machined in transition to the finished diameter of the workpiece W. The sizing device 50 outputs a size signal to the CNC 60 and the X-axis servo driver 33 through a high speed synchronized communication network 70 shown in Fig. 2 where the measured size deviation coincides to one of a plurality of predetermined sizes. A size value of the size signal is a criterion value to initiate a gain adjustment of the first and the second gain adjustment portions 107, 103. The size value of the size signal corresponds to a process change of a coarse grinding, a precise grinding and a micro grinding as explained hereinafter. Further, the sizing device 50 outputs the measured size deviation to the X-axis servo driver 33 through the high speed synchronized communication network 70 shown in Fig. 2 in synchronized with the reference signal being output from the CNC 60.

The CNC 60 outputs command values to each of servo drivers 15, 33 and the motor driver 23 in accordance with machining programs to control the X-axis motor 32 and the spindle motor 13. The CNC 60 functions as a master to output periodical reference signals to any slaves being connected to the high speed synchronized communication network 70.

As shown in Fig. 2, to the high speed synchronized communication network 70 are respectively connected the CNC 60 as the master and the spindle encoder 14, the spindle servo driver 15, the grinding wheel rotating motor driver 23, the X-axis servo driver 33, the X-axis encoder 34, the linear scale 35 and the sizing device 50 as the slaves. These master and slaves connected to the high speed synchronized network 70 are communicated and processed each other synchronously. The high speed synchronized communication network 70 is adopted a real time "Ethernet" registered as the Trade Mark.

### "Operation of the master and the slaves"

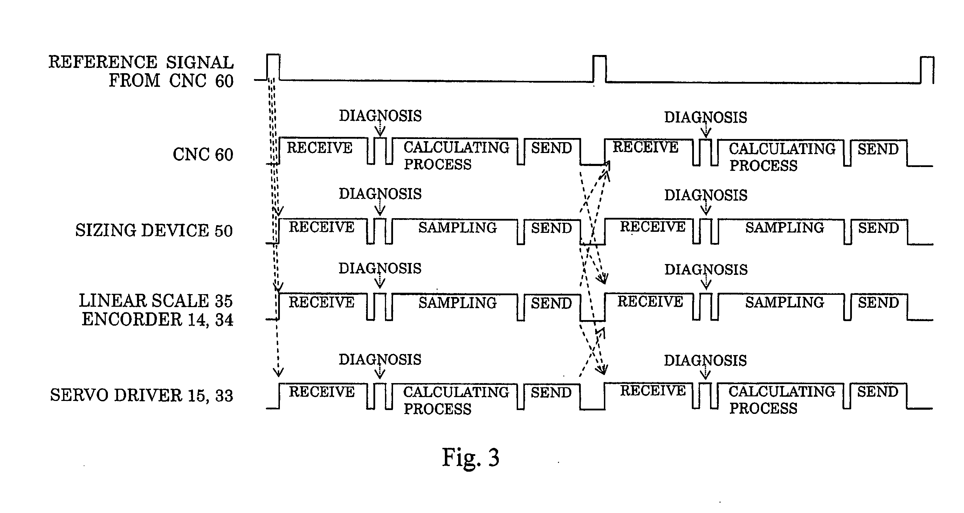

The operation of the master and the slaves of the present invention will be explained hereinafter referred to Fig. 3.

As shown in the first line of Fig. 3, the CNC 60 as the master outputs the periodical reference signals to each of the slaves. As shown in the second line of Fig. 3, the CNC 60 executes a reception process to receive each various signal from other slaves after the CNC 60 outputs the reference signals. The CNC 60 receives the sizing signal from the sizing device 50 for example. After that, the CNC 60 executes a diagnose process and a calculation process, then executes a transmission process to send position commanded values to the servo drivers 15, 33.

As shown in the third line of Fig. 3, after the sizing device 50 receives the reference signal from the CNC 60, the sizing device 50 executes the diagnose process and a sampling process to measure an outer diameter of the workpiece W, and then executes a data transmission process to the X-axis servo driver 33 until receiving the next reference signal.

As shown in the fourth line of Fig. 3, after the X-axis encoder 34 and the linear scale 35 receive the reference signal from the CNC 60, the X-axis encoder 34 and the linear scale 35 execute a diagnose process and a sampling process to detect respectively a rotational angle of the X-axis motor 32 and an X-axis position of the wheel slide 21, then executes a data transmission process to the X-axis servo driver 33 until receiving the next reference signal. As shown in the fourth line of Fig. 3, after the spindle encoder 14 receives the reference signal from the CNC 60, the spindle encoder 14 executes a diagnose process and a sampling process to detect a rotational angle of the spindle motor 13, then executes a data transmission process to the X-axis servo driver 15 until receiving the next reference signal.

As shown in the fifth line of Fig. 3, each of servo drivers 15, 33 receives signals transmitted from other slaves upon receiving the reference signal from the CNC 60. Then, each of servo drivers 15, 33 executes the diagnose process and the calculating process to execute the transmission process sending necessary information to the master or the slaves. Each of servo drivers 15, 33 executes not only the above-identified processes but also a driving for each of motors 13, 32.

To each of the master and the slaves is set an opponent device executing the reception process and the transmission process simultaneously. In other words, the master and each of the slaves execute the data reception and transmission process directly to the other corresponding master or slaves which is the opponent device. "Control block diagram for the X-axis servo driver 33"

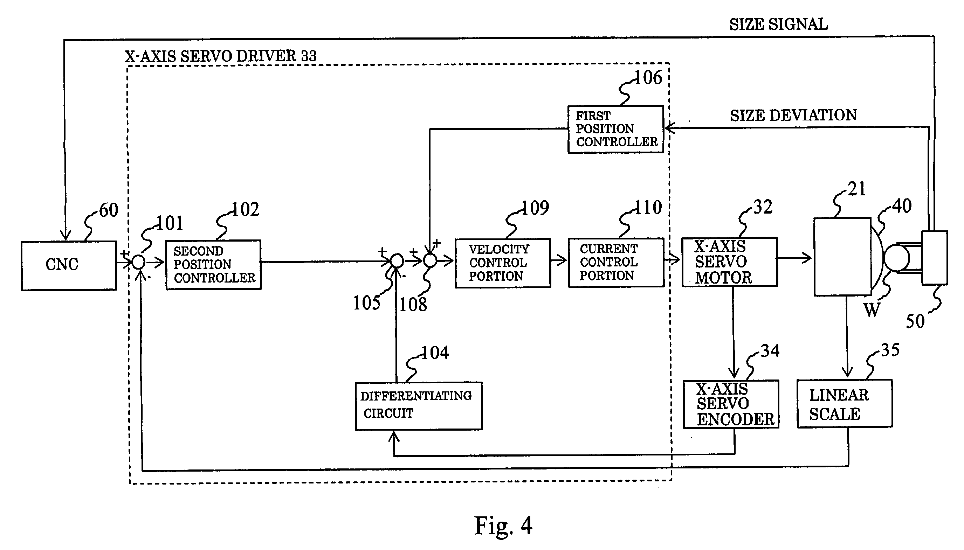

Next referred to Fig. 4, the X-axis servo driver 33 will be explained hereinafter. Fig. 4 is referred to the first embodiment mainly but first gain regulation portion 107 and the second gain regulation portion 103 are exclusively referred to the second embodiment, therefore the X-axis servo driver 33 of the first embodiment will be explained referred to Fig. 4 except for the first gain regulation portion 107 and the second gain regulation portion 103.

As shown in the control block diagram of Fig. 4, the X-axis servo driver 33 consists of a subtracting circuit 101, first and second position control portions 106, 102, a differentiating circuit 104, a subtracting circuit 105, an adding circuit 108, a velocity control portion 109 and a current control portion 110.

The X-axis servo driver 33 executes first feedback control driving the X-axis servo motor 32 to make the size deviation measured by the sizing device 50 to zero, and second feedback control driving the X-axis servo motor 32 on a basis of detected information by the X-axis encoder 34 and the linear scale 35. In the second embodiment of the present invention, especially the X-axis servo driver 33 executes to switch from the second feedback control to the first feedback control as explained in the second embodiment.

The first feedback control is executed by the first position control portion 106, the adding circuit 108, the velocity control portion 109 and the current control portion 110. The second feedback control is executed by the subtracting circuit 101, the second position control portion 102, the differentiating circuit 104, the subtracting circuit 105, the velocity control portion 109 and the current control portion 110.

Each construction will be explained here.

The first position control portion 106 executes position controls, for example proportional position control, to the size deviation being output from the sizing device 50 to output a commanded velocity value. The value of the position control gain, for example proportional gain is set previously and is not variable after set in one embodiment of the first embodiment of the present invention, compared to the other or further other embodiment of the first embodiment of the present invention in which the value of the position control gain is variable.

The subtracting circuit 101 calculates a position deviation of a present position of the wheel slide 21 detected by the linear scale 35 from the commanded position value being output from the CNC. The second position control portion 102 executes position controls for example proportional position control on a basis of the position deviation calculated by the subtracting circuit 101 to output a commanded velocity value.

The differentiating circuit 104 calculates a differential value of the rotational angle of the X-axis motor 32, detected by the X-axis encoder 34, as a rotational angle velocity of the X-axis motor 32. The subtracting circuit 105 calculates a velocity deviation of the rotational angle velocity calculated by the differentiating circuit 104 from the commanded velocity being output from the second position control portion 102.

The adding circuit 108 adds the velocity deviation being output from the subtracting circuit 105 to the commanded velocity value being output from the first position control portion 106. Therefore, the velocity control portion 109 executes a velocity control, such as proportional differential control, to the commanded velocity value being output from the adding circuit 108. The velocity control portion 109 outputs the commanded current value corresponded to a commanded torque value. The current control portion 110 executes a current loop control on a basis of the commanded current value being output from the velocity control portion 109 in order to supply power to the X-axis servo motor 32.

### "Operation of the first and the second feedback controls"

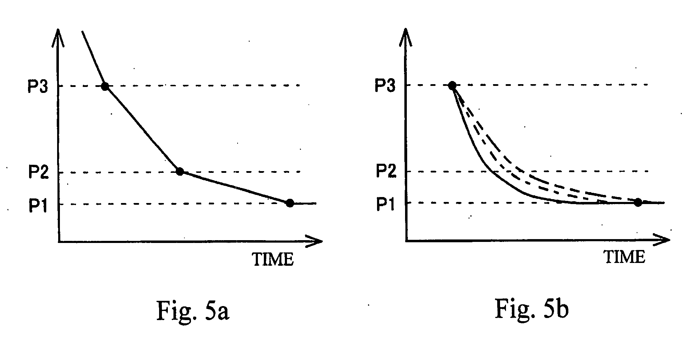

Referred to Fig. 5 the operation of the first and the second feedback controls will be explained hereinafter. In Fig. 5a and Fig. 5b a lateral axis is time and a vertical axis is the outer diameter of the workpiece W.

First of all the second feedback control will be explained referred to Fig. 5a. The sizing device 50 outputs the size signals P1, P2, P3. The size signal P3 is the size signal to switch from the coarse grinding process to the precise grinding process. The size signal P2 is the size signal to switch from the precise grinding process to the micro grinding process. The size signal P1 is the size signal to reach to a finished size.

In the second feedback control, the commanded position value being output from the CNC 60 is switched on a basis of the size signals P1, P2, P3. The CNC 60 outputs the commanded position value in each interval from P3 to P2 and from P2 to P1 such that the moving velocity of the wheel slide 21 along the X-axis is the velocity according to each of the precise grinding process and the micro grinding process. Actually, CNC 60 outputs the commanded position value to switch the moving velocity of the wheel slide 21 along the X-axis when the size signal P3 or P2 is output. The X-axis servo motor 32 is controlled according to the commanded position value from the CNC 60 in the second feedback control.

The first feedback control will be explained referred to Fig. 5b. The first feedback control is started when the size signal P3 is output from the sizing device 50. The value of the position control gain in the first position control portion 106 is set previously and is not variable after set as explained above and this gain value is shown in Fig. 5b as a solid line, a dotted line or an alternate long and short dashed line. One of the solid line, the dotted line or the alternate long and short dashed line is selected when an operator sets the gain value in the first position control portion 106. The gain value being set in the position control portion 106 is largest in the solid line, larger in the dotted line and smallest in the alternate long and short dashed line.

In the first feedback control explained above, the diameter of the ground workpiece W is gradually and smoothly reduced along the smooth line from the diameter corresponding to the size signal P3 to the diameter corresponding to the size signal P1 as shown in each line of the Fig. 5b. And also, a time to reach to the finished diameter is shorter in accordance with the larger gain value being set in the first position control portion 106. If the input value from the second position control portion 102 to the adding circuit 108 is zero in the second feedback control, the X-axis servo motor 32 can be controlled by only the size deviation from the sizing device 50 in the first feedback control.

The grinding wheel 40 is advanced at a rapid feed velocity to the workpiece W by the rotational driving of the X-axis servo motor 32, then at a coarse feed velocity of the coarse feed process to grind the workpiece W coarsely by being controlled by the second feedback control. The sizing device 50 is advanced to engage an outer peripheral surface of the workpiece W in order to measure the outer diameter of the ground workpiece W and outputs the size signal P3 when the diameter of ground workpiece W reaches a position corresponding to the size signal P3. Based on the size signal P3, the first feedback control is started to execute to control the rotation of the X-axis servo motor 32, therefore, the X-axis servo motor 32 is controlled by the first and the second feedback controls by the adding circuit 108.

In the final stage of the above grinding process, where the wheel slide 21 reached to the most advanced position the substituting circuit 101 output zero so that the input value from the substituting circuit 105 to the adding circuit 108 in the first feedback control. In this instance, the ground diameter of the workpiece W were to be the final diameter ideally, however the size deviation from the sizing device 50 does not reach to zero actually because the relatively long workpiece W has a flexibility to be deformable to a direction to the sizing device 50 along the X-axis direction by grinding resistance. Therefore, the sizing device 50 still outputs the actual value of the size deviation corresponding to the deformed value in the first feedback control so that the wheel slide 21 moves to the workpiece W to grind the remaining value of the workpiece W to the final diameter corresponding to the size signal P1 by being controlled only by the first feedback control until the size deviation reaches to zero.

### "Effects of the first embodiment of the present invention"

The first embodiment of the present invention explained above has next effects.

The high speed simultaneous communication can be executed between the X-axis servo driver 33 and the sizing device 50 based on the reference signal from the CNC 60. By this construction, the X-axis servo driver 33 can execute the first feedback control on the basis of the size deviation being output from the monitoring sensor such as the sizing device 50.

The size deviation from the sizing device 50 includes information having any influence of the mechanical deformation based on flexibility of the workpiece W and the grinding wheel 40 and its thermal deformation. Therefore, the grinding machine can grind the workpiece W more high accurately by the first feedback control even though there exists any mechanical and thermal deformation in the workpiece W and the grinding wheel 40. More over, the first feedback control can have high speed response to the measured value by the sizing device 50 in the first feedback control because the first feedback control executes to be controlled directly by the measured value itself. Therefore, the grinding machine can grind the workpiece W with both of more high accuracy and speed by the first feedback control.

The CNC 60 executes the function of the master. The CNC 60 is installed in almost of all machine tools. Therefore, the communication master can be steadily installed in every machine tool with the CNC, therefore the machine tools can have the versatility.

### "Another embodiment of the first embodiment of the present invention"

While it is preset the gain value of the first position control portion 106 in the above-explained first embodiment, that is to say the proportional gain is preset. In this case, the bigger the gain value of the position control is, the sooner the reaching time to the final diameter as shown in Fig. 5b of the first feedback control in a risk of overshooting beyond the target to undercut the workpiece W being defective. On the contrary, the smaller the gain value of the position control is, the longer the reaching time to the final diameter. Therefore, the set of the gain value of the position control is a key of the first feedback control. Where the diameter of the workpiece W is relatively small, that is to say where the rigidity of the workpiece W is small and flexible, the workpiece W is deformed to a curve because of the high flexibility, thereby even though the grinding wheel 40 is advanced to a predetermined location the workpiece does not ground to a predetermined value corresponding to the predetermined location of the workpiece W. This situation is also dependent on a degree of a sharpness of a cutting edge of the grinding wheel 40. That is because where there uses a poor sharpness of the cutting edge a predetermined eliminating volume is not achieve even though the grinding wheel 40 is advanced to the predetermined location. The suitable gain value of the position control is variable according to various kind of factor.

In this another embodiment therefore, the gain value of the first position control portion 106 is previously preset in accordance with the result that the grinding wheel 40 grinds the workpiece W previously. For example of the previous setting, the gain value of the first position control portion 106 is previously preset in the coarse grinding process where the grinding wheel 40 is grinding the workpiece W and is not varied in the precise grinding process and the micro grinding process after preset. Therefore, the gain value of the position control is suitably preset in accordance to a stage of the actual grinding wheel 40 and the workpiece W which is being ground now.

### "Other embodiment of the first embodiment of the present invention"

The gain value of the first position control portion 106 is set as explained previously in these embodiments but may be set to be able to be variable. Concretely, the gain value of the first position control portion 106 is set be able to be variable based on a changed amount a time and the changed amount is that of the size deviation being output from the sizing device 50.

The rigidity of the workpiece W and the sharpness of the cutting edge of the grinding wheel 40 are changeable even in grinding. The diameter of the workpiece W becomes gradually smaller in accordance with a progress of the grinding and the sharpness of the cutting edge of the grinding wheel 40 is gradually worse in accordance with the progress of the grinding. The greater a number of the ground workpiece W by the same grinding wheel 40 is, the worse the sharpness of the cutting edge of the grinding wheel 40 appears extremely. In the other embodiment therefore the gain value of the first position control portion 106 is set to in being variable so that it can be set the best gain value at the present status of the grinding. The changed amount per time of the size deviation is corresponded to the grinding resistance substantially. Therefore, the gain value of the position control can be set suitably for the present grinding status.

### "Further other embodiment of the first embodiment of the present invention"

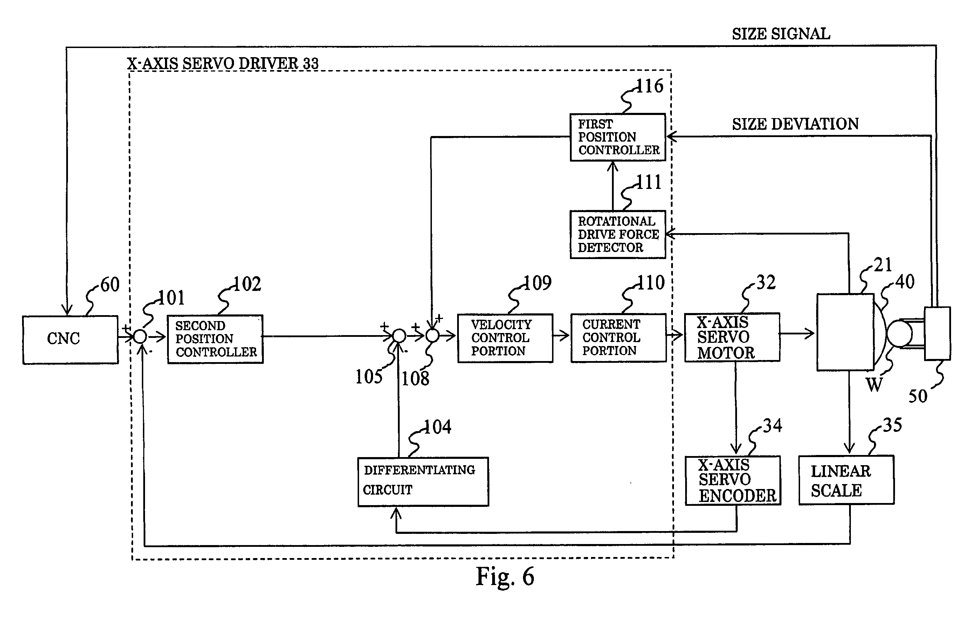

Next the grinding machine of the further other embodiment of the first embodiment according to the present invention will be explained here in referring to Fig. 6. The grinding machine in the further other embodiment is added a rotational driving force detection portion 111 to the X-axis servo driver 33 in the one embodiment of the first embodiment and has a different first position control portion 116 from the first position control portion 106 in the one embodiment of the first embodiment. A function of the same number of parts in the further other embodiment to that in the one embodiment is same to that in the one embodiment of the first embodiment, and therefore, is eliminated to be explained. Therefore, only differences are explained hereinafter.

The rotational driving force detection portion 111 receives an input of current values charged in the grinding wheel rotation motor 22 through the high speed simultaneous communication network 70 to detect the rotational driving force of the grinding wheel 40 by the grinding wheel rotation motor 22. The current value charged in the grinding wheel rotation motor 22 is detected by an un-illustrated current sensor installed in the grinding wheel rotation motor 22. The current sensor is corresponded to a monitoring sensor of the present invention. Therefore, information of the current is input into the rotational driving force detection portion 111 from the current sensor through the motor driver 23 and the high speed simultaneous communication network 70.

The first position control portion 116 sets the gain value of the position control in the first position control portion 116 to be variable according to the rotational driving force detected by the rotational driving force detection portion 111.

In this case, the rigidity of the workpiece W and the sharpness of the cutting edge of the grinding wheel 40 are changeable even in grinding, as explained above. Therefore, the gain value of the position control can be set suitably for the present grinding status because the gain value of the position control in the first position control portion 116 is set to be variable. Especially, the rotational driving force of the grinding wheel 40 is variable in accordance to the grinding resistance so that the gain value of the position control can be set suitably for the present grinding status because the gain value of the position control is set to be variable according to the rotational driving force.

Besides, while the rotational driving force detection portion 111 detects the rotational driving force of the grinding wheel 40 by the grinding wheel rotation motor 22 on a basis of the current values detected by the un-illustrated current sensor, however the rotational driving force may be detected by a sensor mounted directly on a rotational shaft of the grinding wheel rotation motor 22 instead of using the current sensor. The sensor detecting the rotational driving force is corresponded to a monitoring sensor of the present invention.

### "Next other embodiment of the first embodiment of the present invention"

In next other embodiment, the monitoring sensor such as the current sensor detecting the rotational driving force of the grinding wheel 40 by the grinding wheel rotating motor 22 is connected to the high speed simultaneous communication network 70 in adding to the construction of the further other embodiment of the first embodiment. Therefore, the servo driver 33 can control the X-axis servo motor 32 by values detected by the monitoring sensor such as the current sensor. In the X-axis servo driver 33 is input the detected values of the current sensor simultaneously with detected values of the X-axis encoder 34 and the linear scale 35.

Where there is any unbalance in the grinding wheel 40, a position of the grinding wheel 40 along the X-axis direction is influenced by the unbalance so that the unbalance affects to the machining accuracy. In this next other embodiment, therefore, the X-axis servo driver 33 controls the X-axis servo motor 32, in order to eliminate this influence to the machining accuracy by the unbalance, by values of movement of the grinding wheel 40 along the X-axis which are calculated on a basis of the rotational driving force of the grinding wheel 40.

Thereby, it can eliminate any bad influence, which is happened in the grinding wheel 40, by controlling the X-axis motor 32 with using the detected values of the current sensor. Therefore, there is no need to adjust previously the unbalance of the grinding wheel 40 to achieve the high accurate machining.

In this embodiment, the rotational driving force detecting portion 111 detects by the current sensor the rotational driving force of the grinding wheel 40 by the grinding wheel rotating motor 22. The current sensor can be replaced to a sensor mounted directly on a rotating shaft of the grinding wheel rotating motor 22 to detect the rotational driving force. The sensor directly detecting the rotational driving force is corresponded to the monitoring sensor of the present invention.

### "Second embodiment of the present invention"

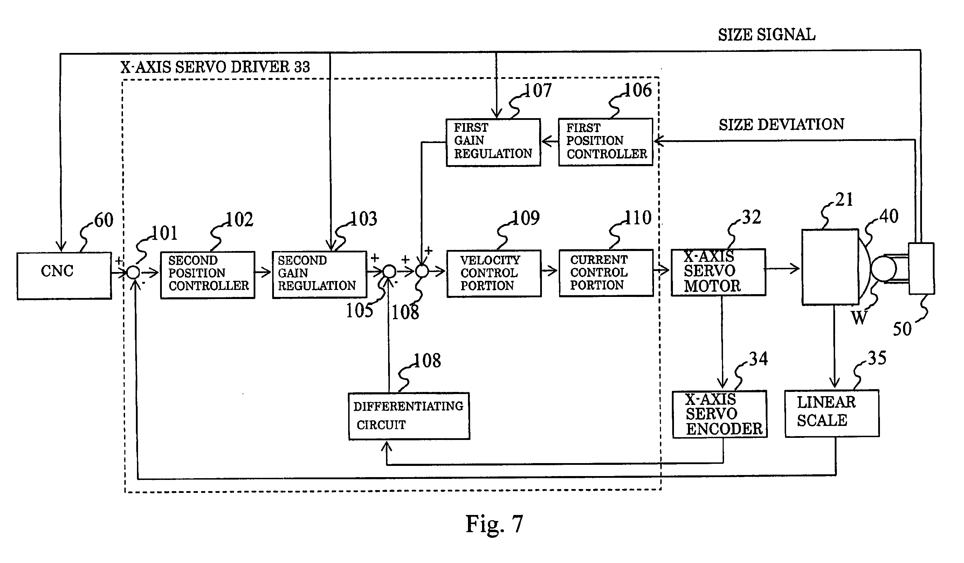

Next the grinding machine of the second embodiment according to the present invention will be explained here in referring to Fig. 7. The grinding machine in the second embodiment is added first gain regulation portion 107 and second gain regulation portion 102 to the X-axis servo driver 33 in the first embodiment. A function of the same number of parts in the second embodiment to that in the first embodiment is same to that in the first embodiment and is eliminated to be explained. Therefore, only differences are explained hereinafter.

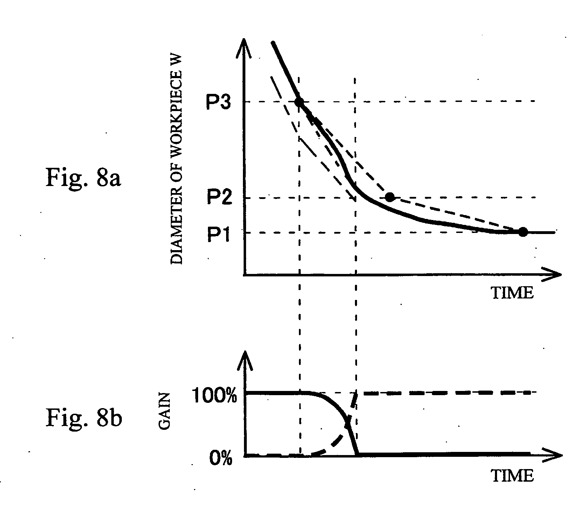

The first gain regulation portion 107 is installed between the first position control portion 106 and the adding circuit 108, and regulates a degree of influence to the first feedback control. Therefore, the first gain regulation portion 107 outputs a value multiplied the commanded velocity value being output from the first position control portion 106 by a value of first gain. The value of the first gain is 0 (zero) to 1 (one), that is to say 0% to 100%. The first gain regulation portion 107 outputs to the next step the commanded velocity value itself being output from the first position control portion 106 where the value of the first gain is 100%. The first gain regulation portion 107 outputs zero value to the next step or does not output anymore where the value of the first gain is 0%. The first gain regulation portion 107 sets 0% as the beginning value and increases it gradually from 0% to 100% as a dotted line shown in Fig. 8b explained later in detail. The first gain regulation portion 107 is initiated to increase from 0% of the value of the first gain by receiving the size signal P3 from the sizing device 50. Therefore, the degree of influence by the first feedback control is increased gradually after outputting the size signal P3 so that the influence to the first feedback control is regulated.

The second gain regulation portion 103 is installed between the second position control portion 102 and the adding circuit 105, and regulates a degree of influence to the second feedback control. Therefore, the second gain regulation portion 103 outputs a value multiplied the commanded velocity value being output from the second position control portion 102 by a value of second gain. The value of the second gain is 0 (zero) to 1 (one), that is to say 0% to 100%. The second gain regulation portion 103 outputs to the next step the commanded velocity value itself being output from the second position control portion 102 where the value of the second gain is 100%. The second gain regulation portion 103 outputs zero value to the next step or does not output anymore where the value of the second gain is 0%. The second gain regulation portion 103 sets 100% as the beginning value and reduces it gradually to 0% as a solid line shown in Fig. 8b explained later in detail. The second gain regulation portion 103 is initiated to reduce 100% of the value of the second gain by receiving the size signal P3 from the sizing device 50. Therefore, the degree of influence by the second feedback control is reduced gradually after outputting the size signal P3 so that the influence to the second feedback control is regulated.

### "Operation of the second embodiment of the present invention"

The operation of the same number of parts in the second embodiment to that in the first embodiment is same to that in the first embodiment and is eliminated to be explained. Therefore, only differences are explained hereinafter, especially focusing to a switching from the second feedback control to the first feedback control referred to Fig. 8. In Fig. 8a, a solid line shows a status change by the second embodiment, a dotted line shows a status change by the first feedback control only and an alternate long and short dashed line shows a status change by the second feedback control only. For a convenience, a long dashed double short dashed line shows a status change of the position demanded value from the CNC 60. In Fig. 8b, the solid line shows the second gain and the dotted line shows the first gain as explained above. The lateral axis of the time in Fig. 8b is corresponded to that in Fig. 8a on a drawing of Fig. 8.

As explained above, the first gain is preset to be zero (0%) until the size signal P3 is output. After the size signal P3 is output, the first gain is initiated to be increased gradually to 100% until the predetermined time is passed as shown by the dotted line in Fig. 8b. An increasing rate of the first gain is small in the beginning and becomes larger in accordance with time passing.

On the other hand as explained above, the second gain is preset to be 100% until the size signal P3 is output. After the size signal P3 is output, the second gain is initiated to be decreased gradually to 0% until the predetermined time is passed as shown by the alternate long and short dashed line in Fig. 8b. A decreasing rate of the second gain is small in the beginning and becomes larger in accordance with time passing.

Therefore, the first gain is increasing gradually on the same time that the second gain is decreasing gradually after the size signal P3 is output so that switching of the influence to feedback controls from the second feedback control to the first feedback control is switched gradually.

Where the values of the first gain and the second gain are changed gradually, the output from the adding circuit 108 is changed gradually in order to decrease the infeed velocity of the wheel slide 21 to grind the workpiece W so that the changing status of the workpiece diameter is traced to the solid line as shown in Fig. 8a. In other words, the diameter of workpiece W is changed in tracing the changing status in the second feedback control until the size signal P3 is output. The diameter of the workpiece W is being switched gradually in tracing from the changing status in the second feedback control to the changing status in the first feedback control between the size signal P3 and a time when the above-identified predetermined time is reached. Then, the diameter of workpiece W is changed in tracing the changing status in the first feedback control after the above-identified predetermined time is passed as explained previously in the first embodiment.

### "Effects of the second embodiment of the present invention"

The second embodiment of the present invention explained above has next effects.

The X-axis servo driver 33 is switching from the second feedback control to the first feedback control between the size signal P3 and the time when the above-identified predetermined time is reached. The second feedback control is executed until the grinding wheel 40 contacts with the workpiece W and in rough grinding process after the grinding wheel 40 contacts with the workpiece W. Since the first feedback control can not execute until the diameter of the workpiece W is reduced by the grinding, the second feedback control is executed at least until the grinding wheel 40 contacts with the workpiece W so that the X-axis control of the wheel slide 21 can be executed firmly. And also the first feedback control can be executed at a time when the diameter of the workpiece W is actually reducing after the size signal P3 is output. Therefore, the first and the second feedback controls are executed certainly so that each of effects of the first and second feedback control can be achieved.

The switching process from the second feedback control to the first feedback control is smoothly executed since the output from the second feedback control to the X-axis servo motor 32 is gradually reduced and the output from the first feedback control to the X-axis servo motor 32 is gradually increased. Thereby, it is eliminated to occur any possible trouble in switching from the second feedback control to the first feedback control.

### "Another embodiment of the second embodiment of the present invention"

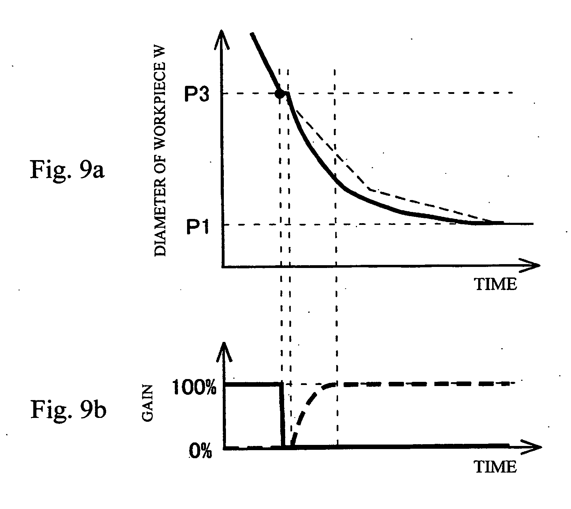

The another embodiment of the second embodiment will be explained hereinafter referred to Fig. 9. The grinding machine in the another embodiment of the second embodiment has a different first gain in the first gain regulation portion 107 and a different second gain in the second gain regulation portion 103 from the previously explained one embodiment of the second embodiment. Therefore, only differences are explained hereinafter. In Fig. 9a, a solid line shows a status change of the outer diameter of the workpiece W by the another embodiment of the second embodiment, a dotted line shows a status change by the second feedback control only. In Fig. 9b, the solid line shows the second gain and the dotted line shows the first gain. The lateral axis of the time in Fig. 9b is corresponded to that in Fig. 9a on a drawing of Fig. 9.

The second gain in the another embodiment is maintained in 100% until the size signal P3 is output, and changed instantly to zero (0%) at the output of the size signal P3 as shown by the solid line in Fig. 9b.

The first gain in the another embodiment is maintained in zero (0%) until the size signal P3 is output and the second gain has been changed to 0%, and thereafter increased gradually to 100% until the second gain has been completely changed to zero (0%) and a predetermined time is passed, as shown by the dotted line in Fig 9b. An increasing rate of the first gain is set larger at the beginning and is thereafter decreased gradually.

Therefore, the first gain is gradually increased from zero after the size signal P3 is output and the second gain has been changed to 0% from 100%. In other words, the X-axis servo driver 33 increases the influence from the first feedback control after the influence from the second feedback control has been finished at the switching from the second feedback control to the first feedback control.

The diameter of the workpiece W is reduced as shown in the solid line of Fig. 9a in accordance with changes in the first gain and the second gain. The reduction of the diameter follows the control by the second feedback control until the size signal P3 is output. In a very short time between the time of the size signal P3 and the predetermined time, the workpiece W is still ground on a basis of inertia movement of the wheel slide 21.

And then, the reduction of the diameter controlled by the second feedback control is gradually transited to that based on the control by the first feedback control until the predetermined time is passed from the size signal P3. Therefore, the reduction of the diameter follows the control by the first feedback control after the predetermined time is passed. Thus, it can be smoothly switched from the second feedback control to the first feedback control by changing the second gain and the first gain.

### "Other embodiment of the second embodiment of the present invention"

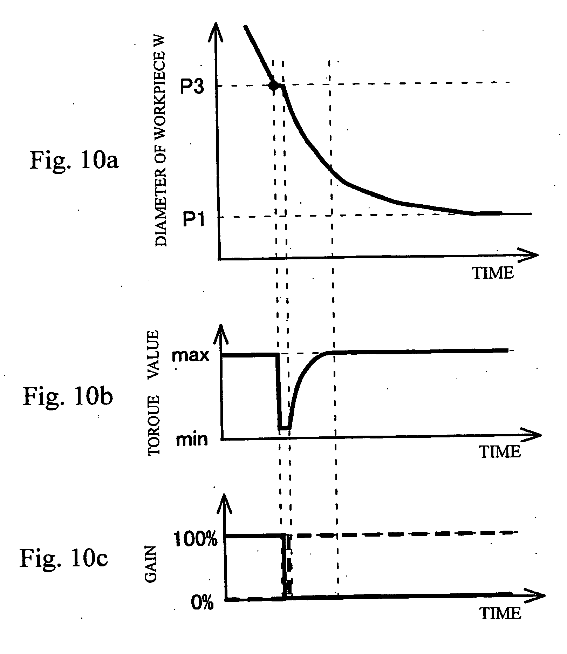

The other embodiment of the second embodiment will be explained hereinafter referred to Fig. 10. The grinding machine in the other embodiment of the second embodiment adds a torque limit to the X-axis servo motor 32 of the previously explained one embodiment of the second embodiment. Therefore, only differences are explained hereinafter. In Fig. 10a, a solid line shows a status change of the outer diameter of the workpiece W along a passing time by the other embodiment of the second embodiment. Fig. 10b shows the torque limit in the current control portion 110 of the X-axis servo driver 33. In Fig. 10c, the solid line shows the second gain and the dotted line shows the first gain. The lateral axis of the time in Fig. 10a, 10b and 10c are corresponded to each other on a drawing of Fig. 10.

The current control portion 110 can change a limitation of torque to the X-axis servo motor 32. The current control portion 110 executes the current control such that the current in each phase of the X-axis servo motor 32 equals to the current commanded value being output from the velocity control portion 109. In this case, the upper limit of the current being output to the X-axis servo motor 32 is limited by the torque limitation in the current control portion 110.

As shown in Fig. 10b, the maximum value of the torque in the X-axis servo motor 32 is maintained in 100% until the size signal P3 is output and the value of the torque is dropped to 10% of the maximum value of the torque by the torque limitation in the current control portion 110 immediately after the size signal P3 is output. Then, the torque value is maintained in 10% of the maximum value of the torque for a predetermined time period, and thereafter increased gradually to the maximum value at another predetermined time.

The first gain is maintained in 0% until the size signal P3 and is increased to 100% in time interval of the former predetermined period as shown in the dotted line of Fig. 10c. The second gain is maintained in 100% until the size signal P3 and is decreased to 0% in time interval of the former predetermined period as shown in the solid line of Fig. 10c. Therefore, it is switched gradually from the second feedback control to the first feedback control during the torque limitation.

The diameter of the workpiece W is reduced as shown in the solid line of Fig. 10a in accordance with changes in the torque value, the first gain and the second gain. The reduction of the diameter follows the control by the second feedback control until the size signal P3 is output. Between the time of the size signal P3 and the former predetermined time, the workpiece W is still ground on a basis of inertia movement of the wheel slide 21.

And then, the reduction of the diameter controlled by the second feedback control is gradually transited to that based on the control by the first feedback control until the former and latter predetermined time is passed from the size signal P3. Therefore, the reduction of the diameter follows in accordance with the control by the second feedback control after the predetermined time is passed. Thus, it can be smoothly switched from the second feedback control to the first feedback control by changing the torque value, the second gain and the first gain.

While the invention has been described in detail with reference to the preferred embodiment, it will be apparent to those skilled in the art that the invention is not limited to the present embodiment, and that the invention may be realized in various other embodiments within the scope of the claims.

For example, while the sizing device is provided for measuring the outer diameter of the workpiece W, however it may be constructed to measure an internal diameter, an end surface position or a width along the axial direction of the workpiece W. And also while the monitoring sensor connected to the high speed simultaneous communication network 70 with the CNC 60 and the X-axis servo driver 33 is the current sensor, rotational driving force detecting sensor of the grinding wheel 40, or the sizing device 50 as the profile measuring sensor measuring the machined profile of the workpiece W, however the monitoring sensor may be a thermal sensor detecting temperature of the workpiece W. In this case, it can execute precise thermal compensation by using the temperature of the workpiece W.

While the grinding machine is explained as example of the machine tool, however it may be other machine tool such as a lathe, a machining center etc. In the case of the machining center, the tool may be an end mill, a milling tool, a drill, even the grinding wheel. In the case of the lathe, the tool may be a cutting tool. Especially in the compound lath, the tool may be not only a cutting tool but also an end mill, a milling tool, a drill, even the grinding wheel.

It is an object of the present invention to provide a machine tool which can execute to machine the workpiece more precisely.

A CNC 60, a servo driver 33 and a monitoring sensor 50 are connected to same simultaneous communication network 70. One of the CNC 60, the servo driver 33 and the monitoring sensor 50 functions as a master to output a periodical reference signal, and two remaining ones of the CNC 60, the servo driver 33 and the monitoring sensor 50 function as a slave to be input the reference signal from the simultaneous communication network 70 and to execute own processes on a basis of the reference signal.

## Claims

1. A machine tool comprising:
a tool supporting member (20) relatively movable to a workpiece (W) along a predetermined axis (X), said tool supporting member (20) supports a tool (21);
a servo motor (32) moving said tool supporting member (20) to said workpiece (W) along said predetermined axis (X);
a servo driver (33) configured to supply an electrical power to said servo motor (32) for driving said servo motor (32) ;
a CNC (60) outputting a commanded value to said servo driver (33), wherein said servo driver (33) supplies the electrical power to said servo motor (32) in accordance with said commanded value from said CNC (60); and
a monitoring sensor (50) monitoring a machining status of said workpiece (W) by said tool (21), **characterized in that**:
said CNC (60), said servo driver (33) and said monitoring sensor (50) are connected to same simultaneous communication network;
one of said CNC (60), said servo driver (33) and said monitoring sensor (50) functions as a master to output periodical reference signal; and
two remaining ones of said CNC (60), said servo driver (33) and said monitoring sensor (50) function as a slave to be input said reference signal from said simultaneous communication network and to execute own processes on a basis of said reference signal,
wherein
said monitoring sensor (50) and said servo driver (33) are directly communicating with each other via said simultaneous communication network, wherein the direct communication between said monitoring sensor (50) and said servo driver (33) is executed based on said reference signal, and
said servo driver (33) is configured to execute a feedback control process as an own process on the basis of information received from said monitoring sensor (50) via said direct communication.

2. A machine tool according to Claim 1, wherein
said monitoring sensor (50) functions as said slave to output monitored information of said machining status each time when said reference signal is input; and
said servo driver (33) is configured to drive said servo motor (32) on a basis of said monitored information being output from said monitoring sensor (50).

3. A machine tool according to Claim 1, wherein
said CNC (60) functions as said master; and
said servo driver (33) and said monitoring sensor (50) functions as said slave.

4. A machine tool according to Claim 1, wherein said monitoring sensor (50) is a profile measuring sensor measuring a machined profile of said workpiece (W) and is a sizing device measuring an outer diameter, an inner diameter, an axial position or an axial width of said workpiece (W).

5. A machine tool according to Claim 1, wherein
said machine tool further comprises a position detector (34) detecting a relative position of said tool supporting member (20) to said workpiece (W) along said predetermined axis (X) or a rotational position angle of said servo motor (32);
said servo driver (33) is configured to drive said servo motor (32) on a basis of monitored information being output from said monitoring sensor (50) and of detected information detected by said position detector (34).

6. A machine tool according to claim 1, further comprising
a position detector (34) detecting a relative position of said tool supporting member (20) to said workpiece (W) along said predetermined axis (X) or a rotational position angle of said servo motor (32);
wherein said monitoring sensor (50) is a profile measuring sensor measuring a machined profile of said workpiece (W) and is a sizing device measuring an outer diameter, an inner diameter, an axial position or an axial width of said workpiece;
said CNC (60) functions as a master to output a periodical reference signal, and said servo driver (33) and said monitoring sensor (50) function as a slave to be input said reference signal from said simultaneous communication network and to execute own processes on a basis of said reference signal;
said monitoring sensor (50) functioning as said slave is configured to output monitored information of said machining status each time when said reference signal is input; and
said servo driver (33) is configured to drive said servo motor (32) on a basis of monitored information being output from said monitoring sensor (50) and of detected information detected by said position detector (34).

## Patentansprüche

1. Maschinenwerkzeug mit:
einem Werkzeughalteelement (20), das relativ zu einem Werkstück (W) entlang einer vorbestimmten Achse (X) bewegbar ist, wobei das Werkzeughalteelement (20) ein Werkzeug (21) hält,
einem Servomotor (32), der das Werkzeughalteelement (20) zu dem Werkstück (W) entlang der vorbestimmten Achse (X) bewegt,
einer Servoantriebseinrichtung (33), die konfiguriert ist, eine elektrische Leistung dem Servomotor (32) zum Antreiben des Servomotors (32) zuzuführen,
einer CNC (60), die zu der Servoantriebseinrichtung (33) einen Befehlswert ausgibt, wobei die Servoantriebseinrichtung (33) die elektrische Leistung dem Servomotor (32) entsprechend dem Befehlswert von der CNC (60) zuführt, und
einem Überwachungssensor (50), der einen Bearbeitungsstatus des Werkstücks (B) durch das Werkzeug (21) überwacht,
**dadurch gekennzeichnet, dass**:
die CNC (60), die Servoantriebseinrichtung (33) und der Überwachungssensor (50) mit demselben gleichzeitigen Kommunikationsnetzwerk verbunden sind,
ein Element aus der CNC (60), der Servoantriebseinrichtung (33) und des Überwachungssensors (50) als ein Master fungiert, um ein periodisches Referenzsignal auszugeben, und
die zwei verbleibenden Elemente von der CNC (60), der Servoantriebseinrichtung (33) und des Überwachungssensors (50) als ein Slave fungieren, dem das Referenzsignal von dem gleichzeitigen Kommunikationsnetzwerk einzugeben ist und der eigene Verarbeitungen auf der Grundlage des Referenzsignals ausführt,
wobei
der Überwachungssensor (50) und die Servoantriebseinrichtung (33) direkt miteinander über das gleichzeitige Kommunikationsnetzwerk kommunizieren, wobei die direkte Kommunikation zwischen dem Überwachungssensor (50) und der Servoantriebseinrichtung (33) auf der Grundlage des Referenzsignals ausgeführt wird, und
die Servoantriebseinrichtung (33) konfiguriert ist, eine Regelungsverarbeitung als eine eigene Verarbeitung auf der Grundlage von Informationen auszuführen, die von dem Überwachungssensor (50) über die direkte Kommunikation empfangen werden.

2. Maschinenwerkzeug nach Anspruch 1, wobei
der Überwachungssensor (50) als der Slave fungiert, wobei er Überwachungsinformationen des Bearbeitungsstatus jedes Mal ausgibt, wenn das Referenzsignal eingegeben wird, und
die Servoantriebseinrichtung (33) konfiguriert ist, den Servomotor (32) auf einer Grundlage der Überwachungsinformationen anzutreiben, die von dem Überwachungssensor (50) ausgegeben werden.

3. Maschinenwerkzeug nach Anspruch 1, wobei
die CNC (60) als der Master fungiert, und
die Servoantriebseinrichtung (33) und der Überwachungssensor (50) als der Slave fungieren.

4. Maschinenwerkzeug nach Anspruch 1, wobei der Überwachungssensor (50) ein Profilmesssensor ist, der ein bearbeitetes Profil des Werkstücks (W) misst, und eine Größenbestimmungsvorrichtung ist, die einen Außendurchmesser, einen Innendurchmesser, eine axiale Position oder eine axiale Breite des Werkstücks (W) misst.

5. Maschinenwerkzeug nach Anspruch 1, wobei
das Maschinenwerkzeug ferner eine Positionserfassungseinrichtung (34) umfasst, die eine relative Position des Werkzeughalteelements (20) zu dem Werkstück (W) entlang der vorbestimmten Achse (X) oder einen Drehpositionswinkel des Servomotors (32) erfasst,
die Servoantriebseinrichtung (33) konfiguriert ist, den Servomotor (32) auf einer Grundlage einer Überwachungsinformation, die von dem Überwachungssensor (50) ausgegeben wird, und einer erfassten Information anzutreiben, die durch die Positionserfassungseinrichtung (34) erfasst wird.

6. Maschinenwerkzeug nach Anspruch 1, ferner mit
einer Positionserfassungseinrichtung (34), die eine relative Position des Werkzeughalteelements (20) zu dem Werkstück (W) entlang der vorbestimmten Achse (X) oder einen Drehpositionswinkel des Servomotors (32) erfasst,
wobei der Überwachungssensor (50) ein Profilmesssensor ist, der ein bearbeitetes Profil des Werkstücks (W) misst, und eine Größenbestimmungsvorrichtung ist, die einen Außendurchmesser, einen Innendurchmesser, eine axiale Position oder eine axiale Breite des Werkstücks misst,
die CNC (60) als ein Master fungiert, um ein periodisches Referenzsignal auszugeben, und die Servoantriebseinrichtung (33) und der Überwachungssensor (50) als ein Slave fungieren, dem das Referenzsignal von dem simultanen Kommunikationsnetzwerk einzugeben ist, und der ein eigene Verarbeitungen auf der Grundlage des Referenzsignals ausführt,
wobei der Überwachungssensor (50), der als der Slave fungiert, konfiguriert ist, Überwachungsinformationen des bearbeiteten Status jedes Mal auszugeben, wenn das Referenzsignal eingeben wird, und
die Servoantriebseinrichtung (33) konfiguriert ist, den Servomotor (32) auf der Grundlage von Überwachungsinformationen, die von dem Überwachungssensor (50) ausgegeben werden, und von erfassten Informationen anzutreiben, die durch die Positionserfassungseinrichtung (34) erfasst werden.

## Revendications

1. Machine-outil comprenant :
un élément (20) de support d'outil relativement mobile par rapport à une pièce à usiner (W) le long d'un axe prédéterminé (X), ledit élément (20) de support d'outil supporte un outil (21) ;
un servomoteur (32) permettant de déplacer ledit élément (20) de support d'outil vers ladite pièce à usiner (W) le long dudit axe prédéterminé (X) ;
un dispositif de servocommande (33) configuré pour alimenter ledit servomoteur (32) en énergie électrique afin de commander ledit servomoteur (32) ;
une CNC (60) permettant de délivrer en sortie une valeur commandée audit dispositif de servocommande (33), où ledit dispositif de servocommande (33) alimente ledit servomoteur (32) en énergie électrique conformément à ladite valeur commandée à partir de ladite CNC (60) ; et
un capteur de surveillance (50) permettant de surveiller un état d'usinage de ladite pièce à usiner (W) par ledit outil (21), **caractérisée en ce que** :
ladite CNC (60), ledit dispositif de servocommande (33) et ledit capteur de surveillance (50) sont connectés au même réseau de communication simultanée ;
un élément parmi ladite CNC (60), ledit dispositif de servocommande (33) et ledit capteur de surveillance (50) fonctionne en tant que maître pour délivrer en sortie un signal de référence périodique ; et
les deux éléments restants parmi ladite CNC (60), ledit dispositif de servocommande (33) et ledit capteur de surveillance (50) fonctionnent en tant qu'esclave pour recevoir ledit signal de référence à partir dudit réseau de communication simultanée et pour exécuter leurs propres processus sur la base dudit signal de référence,
où
ledit capteur de surveillance (50) et ledit dispositif de servocommande (33) sont directement en communication l'un avec l'autre par l'intermédiaire dudit réseau de communication simultanée, où la communication directe entre ledit capteur de surveillance (50) et ledit dispositif de servocommande (33) est exécutée sur la base dudit signal de référence, et
ledit dispositif de servocommande (33) est configuré pour exécuter un processus de commande à rétroaction comme étant son propre processus sur la base d'informations reçues à partir dudit capteur de surveillance (50) par l'intermédiaire de ladite communication directe.

2. Machine-outil selon la revendication 1, dans laquelle
ledit capteur de surveillance (50) fonctionne comme étant ledit esclave pour délivrer en sortie des informations surveillées dudit état d'usinage chaque fois que ledit signal de référence est introduit; et
ledit dispositif de servocommande (33) est configuré pour commander ledit servomoteur (32) sur la base desdites informations surveillées étant délivrées en sortie à partir dudit capteur de surveillance (50).

3. Machine-outil selon la revendication 1, dans laquelle
ladite CNC (60) fonctionne comme étant ledit maître; et
ledit dispositif de servocommande (33) et ledit capteur de surveillance (50) fonctionnent comme étant ledit esclave.

4. Machine-outil selon la revendication 1, dans laquelle ledit capteur de surveillance (50) est un capteur de mesure de profil mesurant un profil usiné de ladite pièce à usiner (W) et est un dispositif de dimensionnement mesurant un diamètre extérieur, un diamètre intérieur, une position axiale ou une largeur axiale de ladite pièce à usiner (W).

5. Machine-outil selon la revendication 1, dans laquelle
ladite machine-outil comprend en outre un détecteur de position (34) permettant de détecter une position relative dudit élément (20) de support d'outil par rapport à ladite pièce à usiner (W) le long dudit axe prédéterminé (X) ou un angle de position de rotation dudit servomoteur (32) ;
ledit dispositif de servocommande (33) est configuré pour commander ledit servomoteur (32) sur la base d'informations surveillées étant délivrées en sortie à partir dudit capteur de surveillance (50) et d'informations détectées qui sont détectées par ledit détecteur de position (34).

6. Machine-outil selon la revendication 1, comprenant en outre
un détecteur de position (34) permettant de détecter une position relative dudit élément (20) de support d'outil par rapport à ladite pièce à usiner (W) le long dudit axe prédéterminé (X) ou un angle de position de rotation dudit servomoteur (32) ;
où ledit capteur de surveillance (50) est un capteur de mesure de profil mesurant un profil usiné de ladite pièce à usiner (W) et est un dispositif de dimensionnement mesurant un diamètre extérieur, un diamètre intérieur, une position axiale ou une largeur axiale de ladite pièce à usiner ;
ladite CNC (60) fonctionne en tant que maître pour délivrer en sortie un signal de référence périodique, et ledit dispositif de servocommande (33) et ledit capteur de surveillance (50) fonctionnent en tant qu'esclave pour recevoir ledit signal de référence à partir dudit réseau de communication simultanée et pour exécuter leurs propres processus sur la base dudit signal de référence ;
ledit capteur de surveillance (50) fonctionnant comme étant ledit esclave est configuré pour délivrer en sortie des informations surveillées dudit état d'usinage chaque fois que ledit signal de référence est introduit; et
ledit dispositif de servocommande (33) est configuré pour commander ledit servomoteur (32) sur la base d'informations surveillées étant délivrées en sortie à partir dudit capteur de surveillance (50) et d'informations détectées qui sont détectées par ledit détecteur de position (34).
